# EUROPÄISCHE PATENTSCHRIFT

(11) **EP 2 293 958 B1**
(45) Veröffentlichungstag und Bekanntmachung des Hinweises auf die Patenterteilung: **09.10.2013**
(21) Anmeldenummer: 09772079.1
(22) Anmeldetag: 12.06.2009
(51) Int. Cl.: B60K 35/00, B60K 37/06

(54) **KRAFTFAHRZEUG-BEDIENEINRICHTUNG**
MOTOR VEHICLE OPERATING DEVICE
DISPOSITIF DE COMMANDE DE VEHICULE MOTORISE

(30) Priorität: 04.07.2008 DE 102008031720
(43) Veröffentlichungstag der Anmeldung: 16.03.2011
(73) Patentinhaber: Bayerische Motoren Werke Aktiengesellschaft, 80809 München (DE)
(72) Erfinder: KUENZNER, Hermann, 85356 Freising (DE); DISTLER, Armin, 81377 München (DE); HERRLER, Michael, 81543 München (DE)
(74) Vertreter: Mayer-Martin, Christian
(86) Internationale Anmeldenummer: PCT/EP2009/004238
(87) Internationale Veröffentlichungsnummer: WO 2010/000379

(56) Entgegenhaltungen:
- WO-A-2008/089802
- DE-A1- 10 207 872
- DE-A1- 19 953 855
- DE-A1-102004 033 278

## Beschreibung

Die Erfindung betrifft eine Kraftfahrzeug-Bedieneinrichtung.

Moderne Kraftfahrzeuge verfügen zunehmend über eine separat von einer Anzeigeeinrichtung gebildete Bedieneinrichtung im Bereich der Mittelkonsole. Eine solche Bedieneinrichtung ist beispielsweise aus der EP 0893750 B1 bekannt. Die Bedieneinrichtung verfügt dabei über ein bidirektional um seine Symmetrieachse drehbares Schaltglied, das zudem axial bewegbar (drückbar) und schwenkbar oder schiebbar gelagert ist. Damit können durch ein Drehen, Drücken und/oder Schwenken/Schieben des Schaltgliedes beispielsweise Menüpunkte auf einer Anzeigeeinrichtung markiert und ausgewählt werden oder Parameter eingestellt werden.

Eine Bedieneinrichtung mit den Merkmalen des Oberbegriffs des unabhängigen Anspruchs ist bekannt aus DE 102 07 872.

Der Erfindung liegt nun die Aufgabe zugrunde, eine verbesserte Kraftfahrzeug-Bedieneinrichtung anzugeben.

Diese Aufgabe wird durch die Merkmale der unabhängigen Ansprüche gelöst. Vorteilhafte Weiterbildungen der Erfindung sind den abhängigen Ansprüchen zu entnehmen.

Eine erfindungsgemäße Kraftfahrzeug-Bedieneinrichtung umfasst eine Anzeigeeinrichtung, ein Bedienelement und eine Steuereinrichtung, die derart miteinander gekoppelt und hardwaretechnisch und/oder programmtechnisch eingerichtet sind, dass auf der Anzeigeeinrichtung ein Bedienelementsymbol dargestellt ist, das hinsichtlich der Umrissgestalt (z.B. ein Kreis) dem Bedienelement entspricht.

Mittels des Bedienelementes ist durch eine auf der Anzeigeeinrichtung dargestellte hierarchische Menüstruktur navigierbar. Navigieren bedeutet dabei auch das Auswählen oder Markieren von Menüebenen oder Menüpunkten oder das Einstellen eines Parameters innerhalb einer Menüebene oder eines Menüpunktes.

Das Bedienelement, beispielsweise ein Dreh-Druck Element oder eine Dreh-Druck-Schiebe(Schwenk)-Element ist entsprechend einer Vielzahl von Bedienfreiheitsgraden (oder Bedienaktionen) bedienbar. An verschiedenen Stellen, beispielsweise Menüpunkten oder Menüebenen, der hierarchischen Menüstruktur sind verschiedene Gruppen von Bedienfreiheitsgraden zur Navigation freigeschaltet, bewirken insbesondere eine weitere Navigation durch die hierarchische Menüstruktur oder eine weitere Bedienung.

Gruppen von Freiheitsgraden sind beispielsweise:
Gruppe 1: Bewegung nach rechts
Gruppe 2: Bewegung nach links
Gruppe 3: Bewegung nach oben (oder vorne)
Gruppe 4: Bewegung nach rechts und links
Gruppe 5: Bewegung nach rechts und links und oben
Gruppe 6: Bewegen nach rechts und oben
Gruppe 7: Bewegung nach rechts und Drehen
Gruppe 8: Bewegung nach rechts und links, und oben und unten (oder nach hinten)
   etc.

Auf oder an dem Bedienelementsymbol werden alle oder ein Teil der an der aktuellen Stelle der Menüstruktur freigeschalteten Bedienfreiheitsgrade (beispielsweise Bewegung nach rechts, Schwenken, Schieben oder Drehen) beispielsweise durch die Darstellung von Pfeilsymbolen angezeigt.

Der Fahrer erkennt dadurch, welche Bedienaktionen momentan möglich oder wirksam sind. Dadurch wird insbesondere während der Fahrt das zuverlässige, schnelle und fehlerfreie Navigieren durch eine Menüstruktur erleichtert. Dieser Vorteil wird durch die folgenden Weiterbildungen noch verstärkt.

Bedienfreiheitsgrade (beispielsweise Drücken), die an jeder Stelle der Menüstruktur freigeschaltet sind, werden vorzugsweise nicht oder nie, insbesondere durch Pfeilsymbole, dargestellt.

Vorzugsweise werden an der aktuellen Stelle der Menüstruktur nicht freigeschaltete Bedienfreiheitsgrade nicht angezeigt.

Eine Weiterbildung sieht vor, dass eine basierend auf einem Drehfreiheitsgrad des Bedienelementes durchführbare Auswahl eines Menüpunktes aus einer Vielzahl von Menüpunkten dadurch angezeigt wird, dass ausgehend von dem Bedienelementsymbol eine Linie in Richtung einer ausgewählten Menüpunktdarstellung, die Teil einer Vielzahl von auswählbaren Menüpunktdarstellungen ist, dargestellt wird.

Die Menüpunktdarstellung, die Teil einer Vielzahl von auswählbaren Menüpunktdarstellungen ist, und in deren Richtung die von dem Bedienelement ausgehende Liniendarstellung verläuft, wird vorteilhafterweise hervorgehoben dargestellt.

Vorzugsweise wird durch eine Bedienaktion entsprechend dem Drehfreiheitsgrad bewirkt, dass ausgehend von dem Bedienelementsymbol eine Linie in Richtung einer zur bislang ausgewählten Menüpunktdarstellung benachbarten Menüpunktdarstellung, die Teil einer Vielzahl von auswählbaren Menüpunktdarstellungen ist, dargestellte wird (nicht mehr in Richtung der bislang ausgewählten Menüpunktdarstellung).

Vorzugsweise wird durch eine Bedienaktion entsprechend dem Drehfreiheitsgrad bewirkt wird, die zur bislang ausgewählten Menüpunktdarstellung benachbarte Menüpunktdarstellung, die Teil einer Vielzahl von auswählbaren Menüpunktdarstellungen ist, und in deren Richtung die von dem Bedienelement ausgehende Liniendarstellung verläuft, hervorgehoben dargestellt wird. Die bislang ausgewählte Menüpunktdarstellung erfolgt nicht mehr hervorgehoben.

Bei der gleichzeitigen Darstellung verschiedener Menüebenen, von denen eine Menüebene aktiv (oder ausgewählt, Kennzeichnung beispielsweise durch eine hervorgehobene Darstellung der Menüebene) ist, wird das Bedienelementsymbol vorzugsweise immer der aktiven Menüebene zugeordnet angezeigt. Beispielsweise wird das Bedienelementsymbol in der Nähe der aktiven Menüebene, ganz oder teilweise der aktiven Menüebene überlagert und/oder in einer dafür vorgesehenen Aussparung der Menüebenendarstellung dargestellt.

Besonders bevorzugt ist es, dass durch eine Bewegung des Bedienelementes in eine Richtung, welche ausgehend von der Darstellung des Bediensymbols der Richtung einer Darstellung einer weiteren Menüebene entspricht, die weitere Menüebene aktiv wird (die bisher aktive Menüebene wird inaktiv) und das Bedienelementsymbol dieser nun aktiven Menüebene zugeordnet angezeigt wird.

Im Folgenden wird die Erfindung anhand von Beispielen unter Bezugnahme auf die folgenden Figuren näher erläutert:

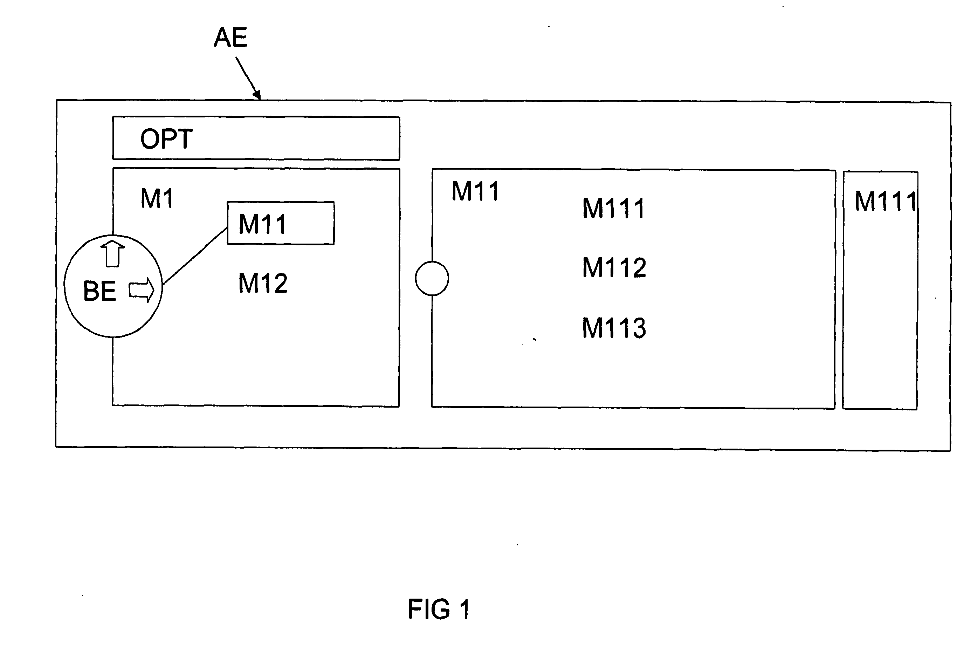

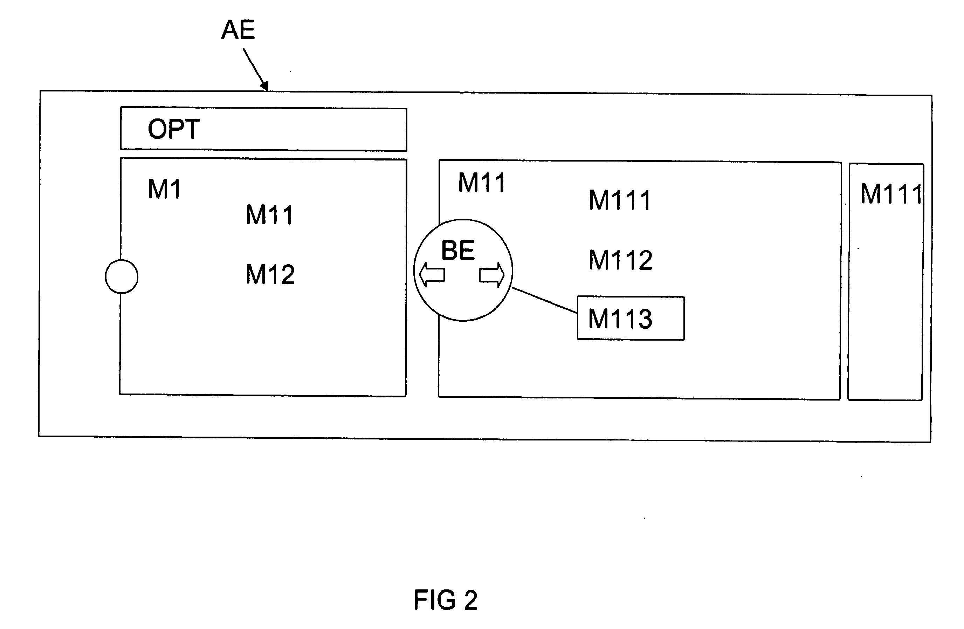

Figuren 1 und 2 zeigen zwei Anzeigestati einer Bedieneinrichtung.
Figur 1 zeigt als Teil einer Kraftfahrzeug-Bedieneinrichtung, die auch ein Bedienelement und eine Steuereinrichtung umfasst, eine Anzeigeeinrichtung AE.

Bei dem Bedienelement (nicht dargestellt) handelt es sich beispielsweise um ein an sich bekanntes Dreh-Druck-Schwenk(Kipp oder Schiebe)element, das grundsätzlich entsprechend einer Vielzahl von Bedienfreiheitsgraden (ein oder mehrere Drehfreiheitsgrade und/oder ein Druckfreiheitsgrad und/oder ein oder mehrere Schwenk- oder Schiebe-Freiheitsgrade) bedienbar ist. Mittels des Bedienelementes kann durch eine auf der Anzeigeeinrichtung AE dargestellte hierarchische Menüstruktur navigiert werden.

Auf der Anzeigeeinrichtung AE ist ein Bedienelementsymbol BE dargestellt, das hinsichtlich der Umrissgestalt dem Bedienelement entspricht, und daher hier kreisförmig dargestellt ist

An verschiedenen Stellen der hierarchischen Menüstruktur sind verschiedene Gruppen von Bedienfreiheitsgraden zur Navigation freigeschaltet. Beispielsweise ist in Figur 1 eine erste Stelle der hierarchischen Menüstruktur, die beispielsweise mit einem ersten Anzeigestatus (oder Bedienstatus) gekoppelt ist, dargestellt.

An dieser Stelle der hierarchischen Menüstruktur werden drei Menüebenen M1, M11, M111 dargestellt. Zudem wird ein zur Menüebene M1 gehörendes Optionsmenü OPT dargestellt.

Die momentan aktive oder ausgewählte Menüebene M1 ist hervorgehoben (beispielsweise besonders hell, kontrastreich oder in einer besonderen Farbe) dargestellt. Zudem ist das Bedienelementsymbol BE dieser aktiven Menüebene M1 überlagert dargestellt.

Die an dieser Stelle der Menüstruktur freigeschalteten oder nutzbaren Bedienfreiheitsgrade des Bedienelementes werden auf dem Bedienelementsymbol BE angezeigt: Die Pfeilsymbole weisen auf ein mögliches Schwenken oder Schieben des Bedienelementes nach oben (oder vorne) und nach rechts hin. An der aktuellen Stelle der Menüstruktur nicht freigeschaltete Bedienfreiheitsgrade (beispielsweise "Schieben nach links") werden nicht angezeigt.

Die basierend auf einem Drehfreiheitsgrad des Bedienelementes durchführbare Auswahl eines Menüpunktes aus einer Vielzahl von Menüpunkten wird dadurch angezeigt, dass ausgehend von dem Bedienelementsymbol BE eine Linie in Richtung einer ersten Menüpunktdarstellung M11, die Teil einer Vielzahl von auswählbaren Menüpunktdarstellungen M11,M12 ist, dargestellt wird.

Eine nicht in der Figur dargestellte Ausführungsvariante sieht vor, dass die Schwenk/Schiebe-Freiheitsgrade nicht angezeigt werden, sondern nur ein oder die Drehfreiheitsgrade angezeigt werden.

Die erste Menüpunktdarstellung M11 wird hervorgehoben, hier eingerahmt, ausgeführt.

Durch eine Bewegung des Bedienelementes in eine Richtung, welche ausgehend von der Darstellung des Bediensymbols BE der Richtung einer Darstellung einer weiteren Menüebene OPT,M11 entspricht, wird die weitere Menüebene aktiv und das Bedienelementsymbol BE dieser nun aktiven Menüebene zugeordnet angezeigt. Beispielsweise ist in Figur 2 ein Anzeigestatus dargestellt, der sich ergibt, wenn das Bedienelement ausgehend von dem Anzeigestatus nach Figur 1 nach rechts bewegt wird.

Es ist nun die der Menüebenendarstellung M11 entsprechende Menüebene aktiv. Die Menüebene M1 ist nicht mehr aktiv. Das Bedienelementsymbol BE ist der nun aktiven Menüebenendarstellung M11 überlagert. Neben den zwei Schwenk-Freiheitsgraden (Pfeil links, Peil rechts) ist wieder ein Drehfreiheitsgrad freigeschaltet. Dieser bezieht sich nun aber auf die Menüpunkte M111,M112,M113 der Menüebene M11, wie durch die von dem Bedienelementsymbol BE ausgehende Liniendarstellung angezeigt.

Der Menüpunkt M113 ist markiert oder ausgewählt. Ein Drücken des Bedienelementes bewirkt nun eine Bestätigung dieser Auswahl dieses Menüpunktes M113.

## Patentansprüche

1. Kraftfahrzeug-Bedieneinrichtung
- mit einer Anzeigeeinrichtung, einem Bedienelement und einer Steuereinrichtung, die derart miteinander gekoppelt und eingerichtet sind,
dass auf der Anzeigeeinrichtung ein Bedienelementsymbol dargestellt ist, das hinsichtlich der Umrissgestalt dem Bedienelement entspricht,
dass mittels des Bedienelementes durch eine auf der Anzeigeeinrichtung dargestellte hierarchische Menüstruktur navigierbar ist oder navigiert wird,
dass das Bedienelement entsprechend einer Vielzahl von Bedienfreiheitsgraden bedienbar ist, **dadurch gekennzeichnet**
**dass** an verschiedenen Stellen der hierarchischen Menüstruktur verschiedene Gruppen von Bedienfreiheitsgraden zur Navigation freigeschaltet sind, und
**dass** auf oder an dem Bedienelementsymbol an der aktuellen Stelle der Menüstruktur freigeschaltete Bedienfreiheitsgrade angezeigt werden.

2. Kraftfahrzeug-Bedieneinrichtung nach Anspruch 1,
bei der an der aktuellen Stelle der Menüstruktur nicht freigeschaltete Bedienfreiheitsgrade nicht angezeigt werden.

3. Kraftfahrzeug-Bedieneinrichtung nach einem der vorhergehenden Ansprüche,
bei der eine basierend auf einem Drehfreiheitsgrad des Bedienelementes durchführbare Auswahl eines Menüpunktes aus einer Vielzahl von Menüpunkten dadurch angezeigt wird, dass ausgehend von dem Bedienelementsymbol eine Linie in Richtung einer ausgwewählten Menüpunktdarstellung, die Teil einer Vielzahl von auswählbaren Menüpunktdarstellungen ist, dargestellt wird.

4. Kraftfahrzeug-Bedieneinrichtung nach einem der vorhergehenden Ansprüche,
bei der die ausgewählte Menüpunktdarstellung, die Teil einer Vielzahl von auswählbaren Menüpunktdarstellungen ist, und in deren Richtung die von dem Bedienelement ausgehende Liniendarstellung verläuft, hervorgehoben erfolgt.

5. Kraftfahrzeug-Bedieneinrichtung nach einem der vorhergehenden Ansprüche,
bei der bei der gleichzeitigen Darstellung verschiedener Menüebenen, von denen eine Menüebene aktiv, das Bedienelementsymbol der aktiven Menüebene zugeordnet angezeigt wird.

6. Kraftfahrzeug-Bedieneinrichtung nach einem der vorhergehenden Ansprüche,
bei der durch eine Bewegung des Bedienelementes in eine Richtung, welche ausgehend von der Darstellung des Bediensymbols der Richtung einer Darstellung einer weiteren Menüebene entspricht, die weitere Menüebene aktiv wird und das Bedienelementsymbol dieser aktivierten Menüebene zugeordnet angezeigt wird.

## Claims

1. A motor vehicle operating device
- with a display device, an operating element and a control device, which are coupled to one another and set up in such a way
that an operating element symbol corresponding to the operating element with respect to the outline shape is displayed on the display device,
that by means of the operating element it is possible to navigate, or navigation takes place, by a hierarchical menu structure displayed on the display device,
that the operating element can be operated in accordance with a large number of operating degrees of freedom, **characterised in that**
various groups of operating degrees of freedom are enabled for navigation at various points of the hierarchical menu structure, and
**in that** enabled operating degrees of freedom at the current point of the menu structure are displayed on or at the operating element symbol.

2. A motor vehicle operating device according to claim 1, wherein nonenabled operating degrees of freedom at the current point of the menu structure are not displayed.

3. A motor vehicle operating device according to any one of the preceding claims, wherein a selection of a menu point that can be carried out based on a rotational degree of freedom of the operating element from a large number of menu points is displayed in that, proceeding from the operating element symbol, a line in the direction of a selected menu point display, which is part of a large number of selectable menu point displays, is displayed.

4. A motor vehicle operating device according to any one of the preceding claims, wherein the selected menu point display, which is part of a large number of selectable menu point displays, and in the direction of which the line display proceeding from the operating element runs, is highlighted.

5. A motor vehicle operating device according to any one of the preceding claims, wherein when various menu levels are displayed at the same time, of which one menu level is active, the operating element symbol is displayed in a manner assigned to the active menu level.

6. A motor vehicle operating device according to any one of the preceding claims, wherein by a movement of the operating element in a direction which, proceeding from the display of the operating symbol, corresponds to the direction of a display of a further menu level, the further menu level becomes active and the operating element symbol is displayed in a manner assigned to this activated menu level.

## Revendications

1. Dispositif d'actionnement d'un véhicule,
comportant un dispositif d'affichage, un élément d'actionnement et un dispositif de commande qui sont couplés et réalisés,
de sorte que sur le dispositif d'affichage soit représenté un symbole de l'élément d'actionnement dont le contour correspond à la configuration de cet élément,
que, au moyen de l'élément d'actionnement on navigue ou puisse naviguer sur une structure de menu hiérarchique représentée sur le dispositif d'affichage,
que, l'élément d'actionnement puisse être actionné selon plusieurs degrés de liberté d'actionnement,
**caractérisé en ce qu'**
en différents points de la structure de menu hiérarchique sont déverrouillés différents groupes de degrés de liberté d'actionnement pour permettre la navigation, et
sur ou dans le symbole de l'élément d'actionnement sont indiqués les degrés de liberté d'actionnement déverrouillés sur l'emplacement actuel de la structure de menu.

2. Dispositif d'actionnement d'un véhicule conforme à la revendication 1, dans lequel sur l'emplacement actuel de la structure de menu les degrés de liberté d'actionnement non déverrouillés ne sont pas indiqués.

3. Dispositif d'actionnement d'un véhicule conforme à l'une des revendications précédentes dans lequel la sélection d'un point menu parmi une série de points de menu pouvant être effectuée à partir d'un degré de liberté de rotation de l'élément d'actionnement, est indiquée de sorte qu'à partir du symbole de l'élément d'actionnement, soit représentée une ligne en direction d'une représentation de point de menu sélectionnée correspondant à une partie d'une série de représentations de points de menu pouvant être sélectionnées.

4. Dispositif d'actionnement d'un véhicule conforme à l'une des revendications précédentes dans lequel la représentation du point menu sélectionnée qui correspond à une partie d'une série de représentations de points de menu pouvant être sélectionnées et dans la direction de laquelle s'étend la représentation linéaire partant de l'élément d'actionnement accentuée.

5. Dispositif d'actionnement d'un véhicule conforme à l'une des revendications précédentes dans lequel, en présence de la représentation simultanée de différents plans de menu parmi lesquels un plan de menu est actif, le symbole de l'élément d'actionnement est indiqué en étant associé avec le plan de menu actif.

6. Dispositif d'actionnement d'un véhicule conforme à l'une des revendications précédentes dans lequel en déplaçant l'élément d'actionnement dans une direction qui, à partir de la représentation du symbole d'actionnement correspond à la direction d'une représentation d'un autre plan de menu, cet autre plan menu est activé, et le symbole de l'élément d'actionnement est indiqué de manière associée à ce plan de menu activé.
